# EUROPEAN PATENT SPECIFICATION

(11) **EP 0 970 842 B1**
(45) Date of publication and mention of the grant of the patent: **08.09.2004**
(21) Application number: 99850108.4
(22) Date of filing: 18.06.1999
(51) Int. Cl.: B60N 2/28

(54) **Connecting means for a child safety seat**
Befestigungsvorrichtung für einen Sicherheits-Kindersitz
Dispositif de fixation pour un siège de sécurité pour enfant

(30) Priority: 06.07.1998 SE 9802437; 26.01.1999 SE 9900217
(43) Date of publication of application: 12.01.2000
(73) Proprietor: BRÖDERNA HOLMBERGS FABRIKS AB, S-344 21 Anderstorp (SE)
(72) Inventor: Rimark, Bengt, 331 42 Värnamo (SE); Karlsson, Magnus, 331 30 Värnamo (SE)
(74) Representative: Ström, Tore

(56) References cited:
- EP-A- 0 703 113
- DE-U- 29 620 067

## Description

The invention relates to a mounting means for a child seat intended to be mounted facing forward on a vehicle seat with the seat back of the child seat placed against the seat back of the vehicle seat, comprising two connectors for co-operation with a fixedly mounted anchoring means available between the seat bottom and seat back of the vehicle seat, as generally known in the art (See, for example, EP-A-0 703 113).

It has previously been proposed to make the connectors telescopingly displaceable on the child seat at the rear edge of the seat bottom thereof such that the connectors in a withdrawn position are enclosed in order that they cannot damage the vehicle at the handling of the child seat, and in a projecting position can be easily hooked onto the anchoring means, the connectors then being withdrawn in order to engage the seat back of the child seat with the seat back of the vehicle seat the child seat being displaced on the seat bottom of the vehicle seat. The connectors then are locked in the withdrawn position. At the displacement of the child seat on the seat bottom of the vehicle seat this can easily be damaged; for example a vehicle seat with leather finish can be scratched by the displacement of the child seat thereon.

When the seat back of the child seat of the prior art embodiment is engaged with the seat back of the vehicle seat, which is the position of use of the child seat, the forward edge of the child seat will be located at different forward positions on the seat bottom of the vehicle seat depending on the dimensions and shape of the vehicle seat. At a collision or at sudden braking of the vehicle the child seat will pivot with the anchoring means as pivot axis the seat bottom of the child seat being pressed against the seat bottom of the vehicle seat. Depending on the position of the forward edge of the seat bottom of the child seat the lever of the compression force acting against the seat bottom of the vehicle seat will be most varying and in the worst case can be unfavourable (small) due to the fact that the compression force is acting so close to the pivot axis (anchoring means) that the seat bottom of the vehicle seat thus will yield so much that the safety of the child in the child seat will be jeopardized.

An object of the invention is to provide a mounting means of the kind referred to above which eliminates said disadvantages by the fact that the child seat at mounting thereof on the vehicle seat will not at all slide on the seat bottom of the vehicle seat and the force acting against the seat at collision or sudden braking always will be received at one and the same position as near the forward end of the seat bottom of the vehicle seat as possible independent of the position of the child seat on the vehicle seat.

Said object is achieved by the mounting means according to the invention, as defined in claim 1, particularly by means of the characterizing features set forth in that claim.

In order to explain the invention in more detail illustrative embodiments will be described below reference being made to the accompanying drawings in which
FIG. 1 is a side view of a vehicle seat and a child seat positioned thereon in a position for mounting on the vehicle seat,
FIG. 2 is a corresponding view as FIG. 1 with the child seat in the position of use on the vehicle seat,
FIG. 3 is a plan view of the mounting means according to a first embodiment of the invention in mounting position,
FIG. 4 is a cross-sectional view along line A-A in FIG. 3,
FIG. 5 is a perspective view of the mounting means in mounting position,
FIG. 6 is a corresponding plan view as FIG. 3 but with the mounting means in the position of use,
FIG. 7 is a cross-sectional view along line B-B in FIG. 6,
FIG. 8 is a perspective view of the mounting means in the position of use,
FIG. 9 is an enlarged vertical cross-sectional view of a connector in open position,
FIG. 10 is an enlarged transverse cross-sectional view along line C-C in FIG. 3,
FIG. 11 is a vertical cross-sectional view corresponding to FIG. 9 but with the connector in lock position,
FIG. 12 is an enlarged vertical cross-sectional view of an indicating means in an indicating position,
FIG. 13 is a horizontal cross-sectional view of the indicating means in FIG. 12,
FIG. 14 is an elevational view of the indicator proper,
FIGS. 15 and 16 are corresponding views as FIGS. 12 and 13 with the indicating means in another indicating position,
FIG. 17 is a plan view of the mounting means according to a second embodiment of the invention in a starting position,
FIG. 18 is an end view of the mounting means as seen from the right in FIG. 17,
FIG. 19 is a side view of the mounting means in the position according to FIG. 17,
FIG. 20 is a perspective view of the mounting means in FIGS. 17-19 in the starting position,
FIG. 21 is an enlarged fragmentary perspective view of a latch and blocking mechanism forming part of the mounting means,
FIG. 22 is a cross-sectional view along line D-D in FIG. 17,
FIG. 23 is a cross-sectional view corresponding to FIG. 22 but with the connector in lock position,
FIG. 24 is a cross-sectional view corresponding to FIG. 23 when decoupling the slidable carrier,
FIG. 25 is a plan view similar to FIG. 17 but with the carrier in position of use, and
FIG. 26 is a cross-sectional view along line E-E in FIG. 25.

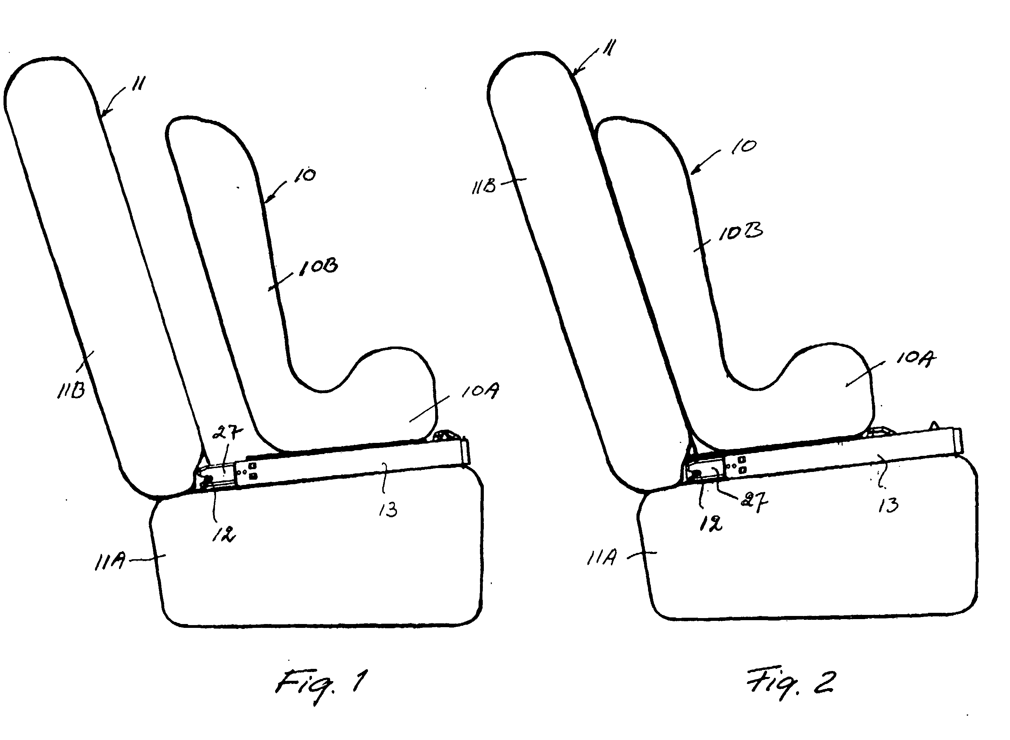

In FIGS. 1 and 2 there is disclosed diagrammatically a child seat 10 having a seat bottom 10A and a seat back 10B, and a vehicle seat 11 having a seat bottom 11A and a seat back 11B. Between the seat bottom 11A and the seat back 11B two brackets 12 (type ISOFIX) are provided which are securely mounted in the vehicle and form anchoring means for the child seat 10. This is shown in mounting position in FIG. 1 and in position of use in FIG. 2 and is provided with the mounting means according to the invention which is indicated generally at 13.

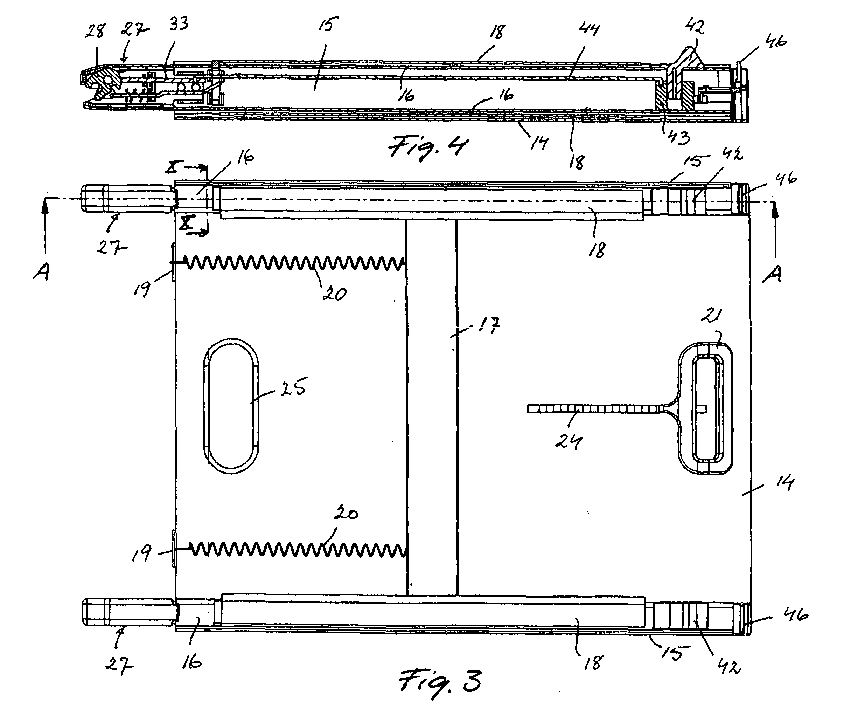

Referring to FIGS. 3-16 the mounting means 13 comprises a chassis which consists of a bottom metal sheet 14 with edge flanges 15 bent upwards at right angles, and two U-shaped metal sheet sections 16 which are welded to the inside of one and the other, respectively, of the edge flanges 15, cf. FIG. 10, so that the bottom metal sheet and the metal sheet sections form two box girders extending along opposite edges of the bottom metal sheet. A slidable carrier which comprises a transverse box girder 17 and two U-shaped sections 18 attached each to one end of the box girder 17 and extending at right angles to said girder, is displaceably guided at the U-shaped sections on the box girders formed by the edge flanges 15 and the metal sheet sections 16, cf. FIG. 10, which thus form guide rails for the slidable carrier. Two helical tension springs 20 are engaged between two lugs 19 angled upwards from the bottom metal sheet 14, and the box girder 17. The child seat 10 which can be of a known construction and can comprise a plastic shell with a soft resilient covering shall be attached to the slidable carrier at the seat bottom 10A so that the fastening means forms an undercarriage of the child seat as will be seen from FIGS. 1 and 2. In the plastic shell or in an element fixedly connected to the slidable carrier a handle 21 shall be pivotally mounted by means of a shaft extending through an aperture 22 in the handle, and this handle is constructed to engage at a projection 23 on the handle with a saw-toothed rail 24 which is connected to the upper side of the bottom metal sheet 14. By this engagement the slidable carrier is kept in a desired position on the chassis of the fastening means against the bias of the springs 20. In the bottom metal sheet 14 a handle opening 25 is provided in order to facilitate handling of the child seat provided with the mounting means.

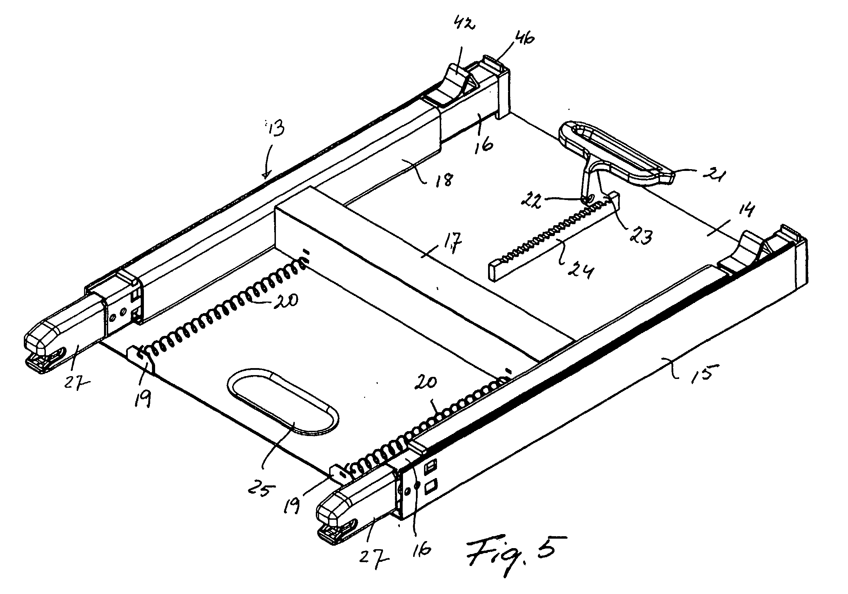

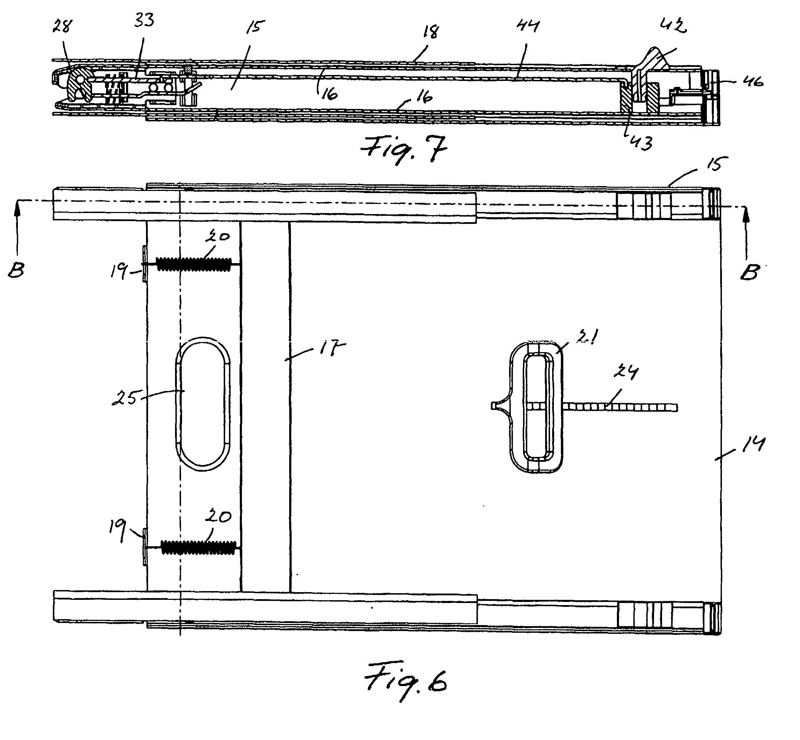

At one end of each of the box girders 15, 16 of the chassis a connector 27 is attached by means of rivets 26 said connector being shown enlarged in FIGS. 9 and 11. The connector comprises a lock hook 28 which is pivoted on a pin 29 and is biased by means of a shackle spring 30 for pivotal movement clock-wise as seen in FIGS. 9 and 11. The lock hook 28 forms a notch 31 for engagement with the bracket 12 and a notch 32 for engagement with a latch member 33 which is displaceably guided in a flap 34 struck from the edge flange 15, and is biased by a helical spring 35 against the lock hook engaging the edge surface thereof. With the slidable carrier and thus the child seat withdrawn and locked by means of the latch 21-24 in the position shown in FIGS. 3-5 the latch member 33 is located outside the notch 32. A rail 36 which is displaceably guided in the flap 34 and is biased against the lock hook 28 by means of a compression spring 37, has an angled end 36A engaging displaceably in an oblique groove 38 on a blocking member 39 which is displaceably guided in the transverse direction of the box girder 15, 16 by means of flaps 40 struck from the edge flange 15. With the rail 36 in the shown position the blocking member 39 is kept in a projecting position, FIG. 9, and is the projecting portion thereof located in front of the end of the U-shaped section 18 forming part of the slideable carrier, so that the carrier and thus the child seat cannot be displaced to the left in relation to the chassis as seen in FIGS. 3-5 and 9 even if the latch means 21-24 should be actuated to released position. The connector 27 is enclosed by a snapped-on plastic cover 40'.

The child seat is now lifted to a position over the vehicle seat and the lock hooks 28 thereof are moved against the brackets 12 which are received in the notches 31. A notch 41 which diverges towards the mouth thereof is provided in the box girder 15, 16 and in the cover 40' in order to facilitate the movement of the lock hook 28 onto the bracket 12. This operation can easily be performed since the connectors can be freely observed behind the withdrawn child seat. When the connector is engaged with the bracket 12 and this is received in the notch 31 the lock hook 28 is pivoted to lock position counter-clockwise as seen in FIG. 9 against the bias of the shackle spring 30 so that the latch member 33 can snap into the notch 32 in order to latch the lock hook in the lock position thereof. After connection the child seat is pivoted onto the seat bottom 11A of the vehicle seat 11 to the position in FIG. 1 in which the child seat rests stationarily against the seat bottom 11A at the bottom metal sheet 14.

At the same time as the lock hook 28 is pivoted to lock position it presses against the end of the rail 36 which will be displaced to the right as seen in FIG. 9 against the bias of the spring 37 the angled end 36A of the rail in co-operation with the oblique groove 38 withdrawing the blocking member 39 to the position shown in FIG. 11 so that the displacement of the slidable carrier and thus the child seat to the left as seen in FIG. 1 now can no longer be prevented by the blocking member. When the latch means 21-24 is brought to the release position the slidable carrier with the child seat mounted thereon can be displaced in relation to the chassis to the position disclosed in FIG. 2, in which the seat back 10B of the child seat is engaged with the seat back 11B of the vehicle seat. The child seat is now in the position of use on the vehicle seat, and it has been brought to this position without sliding on the seat bottom of the vehicle seat because the displacement from the position in FIG. 1 to the position according to FIG. 2 takes place between the slidable carrier and the stationary chassis.

When the child seat is loaded at a collision or at sudden braking it will tend to pivot clockwise as seen in FIG. 2 with the brackets 12 as pivot axis. The force acting on the child seat will be distributed over the seat bottom of the vehicle seat by means of the chassis of the mounting means said chassis extending to the front edge of the seat bottom of the vehicle seat. The forward end of the chassis is always at a determined distance from the connectors 27 and thus from the brackets 12. Regardless of the position of the child seat on the vehicle seat the force thus will act on the seat bottom of the vehicle seat with a large lever of determined, unchangeable length, and as a consequence thereof there are considerably improved conditions for the vehicle seat to take up this force than if the lever had extended only to the forward edge of the child seat.

For decoupling the child seat from the vehicle seat there is provided on each box girder 15, 16 at the end which is opposite to the connector 27 an operating member 42 which is displaceable along the box girder 15, 16 and engages a block 43 displaceably mounted in the box girder said block being connected with the latch member 33 by means of a connecting rod 44. By displacement of the operating member 42 to the right as seen in FIG. 7 the latch member 33 is withdrawn from the notch 32 against the bias of the spring 35 so that the lock hook 28 can be disengaged from the bracket 12.

When the latch 21-24 is disengaged the slidable carrier and thus the child seat will be kept by the springs 20 in the position shown in FIG. 2 in relation to the chassis the connectors 27 being enclosed by the U-shaped sections 18 as will be best seen from FIGS 6-8. When the child seat shall be mounted to the vehicle seat the slidable carrier should initially be in this position which is also a shipping position so that the connectors cannot damage the vehicle for example on the seat and the instrument panel when the child seat is handled inside the vehicle.

It is important that one surely knows that the connectors 27 are in fact in the latch position when they have been engaged with the brackets 12 and that the child seat thus is securely anchored on the vehicle seat. For this purpose the mounting means according to the invention comprises an indicating means shown in FIGS. 12-16. A plastic housing 45 is mounted to the end of the box girder 15, 16 and in this housing there is provided an indicator 46 guided for displacement vertically said indicator having at the lower edge thereof a V-shaped notch 46A. Inside the box girder 15, 16 a cross-shaped element 47 is provided, which can be pivoted about a vertically projecting pin 48 integral with the plastic housing 45. The block 43 has a projection 49 which can be engaged with one cross arm of the element 47 while the stem of the cross-shaped element 47 has a projecting pin 50 extending into the plastic housing 45 and received by the notch 46A.

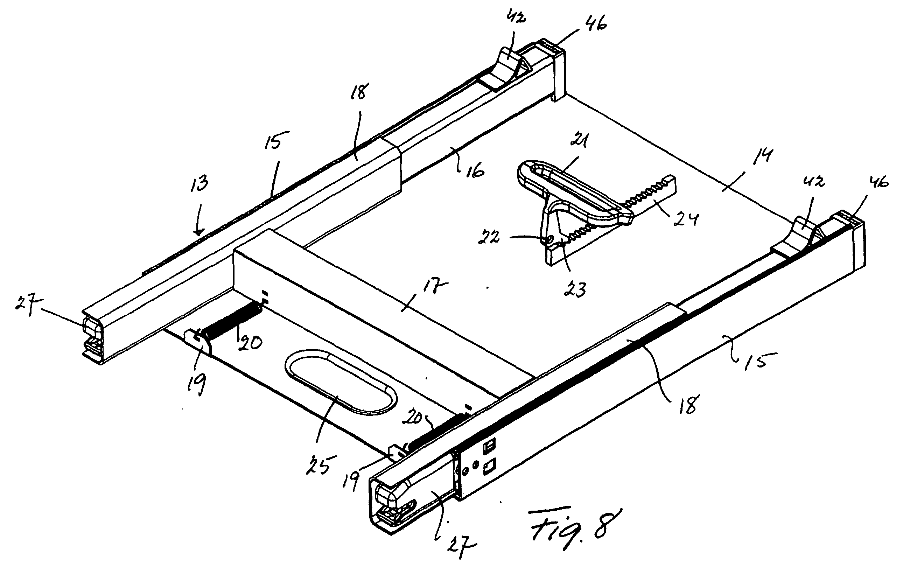

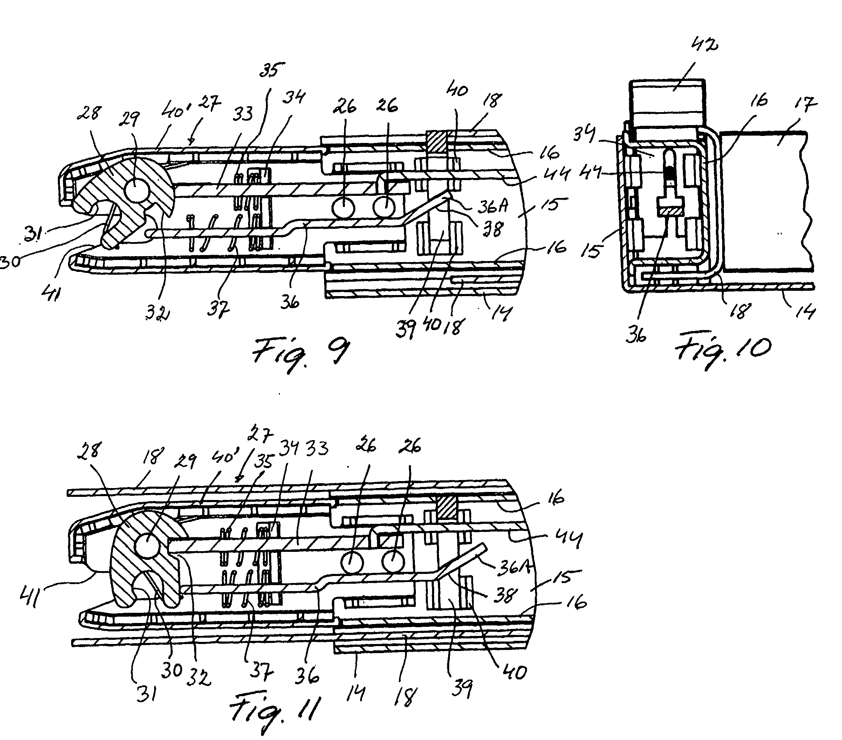

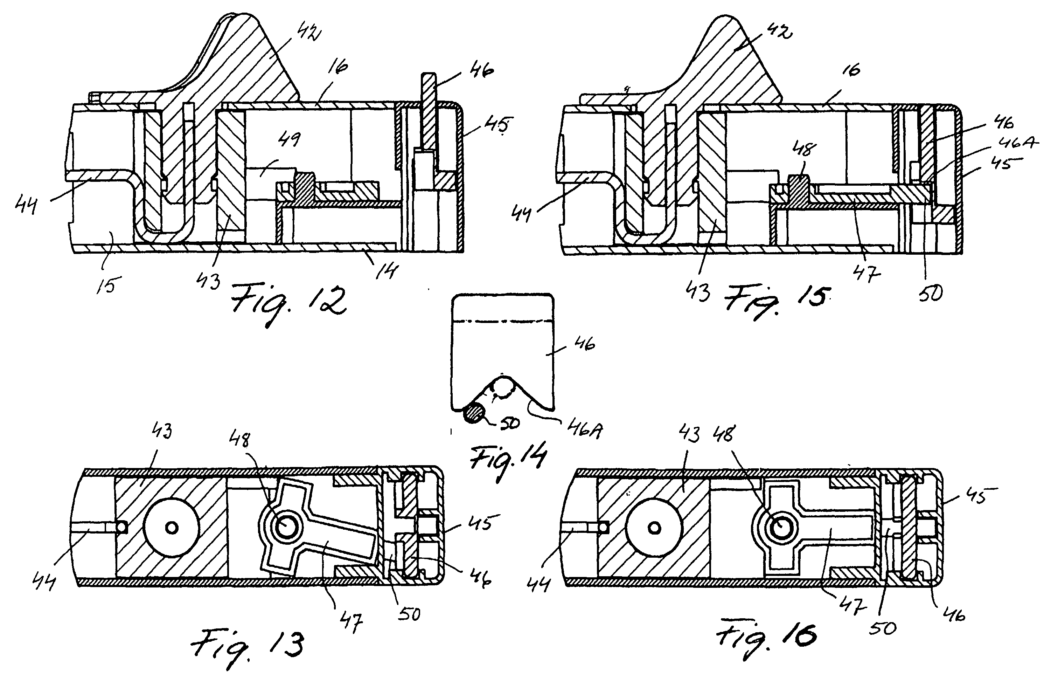

When the lock hook 28 is in open position according to FIG. 9 the latch member 33 is pushed back against the bias of the spring 35 and the block 43 then is kept in a right end position via the connecting rod 44, FIGS. 12 and 13. The projection 49 presses against the element 47 and keeps this element in an angled position the pin 50 being in the position shown by solid lines in FIG. 14 and keeping the indicator 46 in a raised position in which the indicator projects upward from the box girder 15, 16. That the indicator is in this position can be verified by the sight as well as the feeling. If the lock hook is now displaced to the engaged position the block 43 will be displaced to the left and then the projection 49 will be withdrawn to the position according to FIGS. 15 and 16. The indicator 46 will now by gravity sink into the housing 45 while the cross-shaped element 47 by the movement of the pin 50 along one oblique surface of the notch 46A will be cammed to the centred position according to FIGS. 15 and 16. No part of the indicator 46 now projects from the box girder 15, 16. When it cannot be seen or felt that the indicator projects from the box girder 15, 16 the connector accordingly is in the latch position thereof.

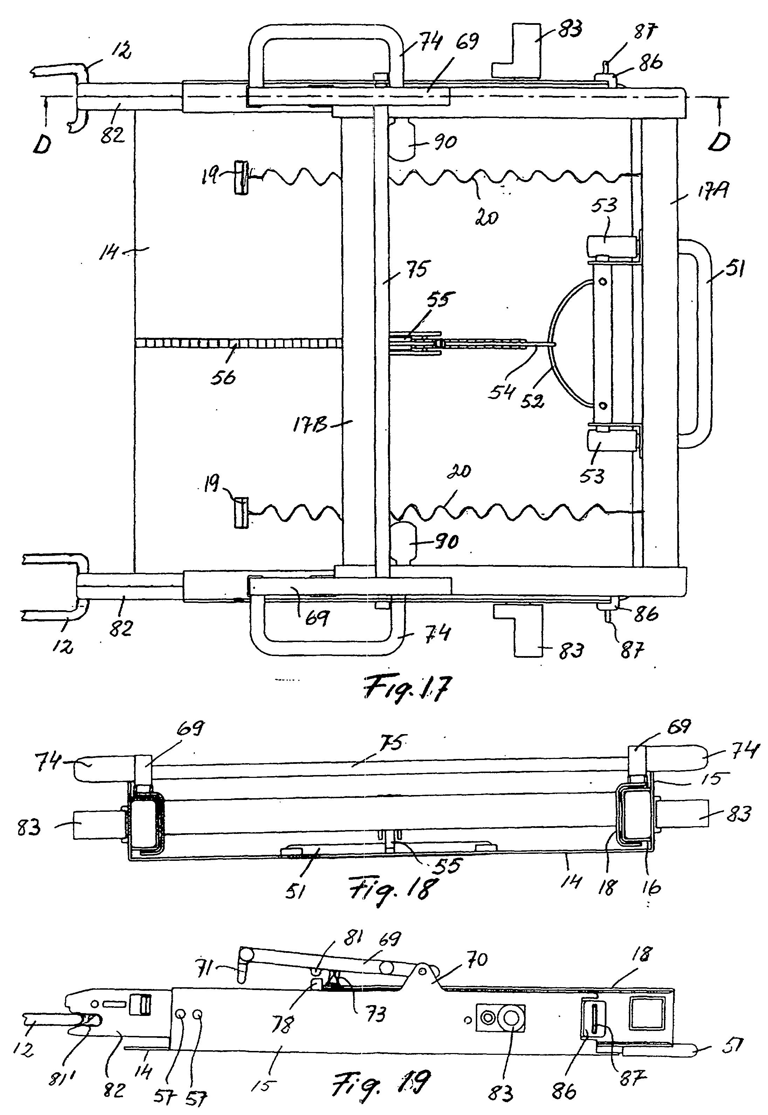

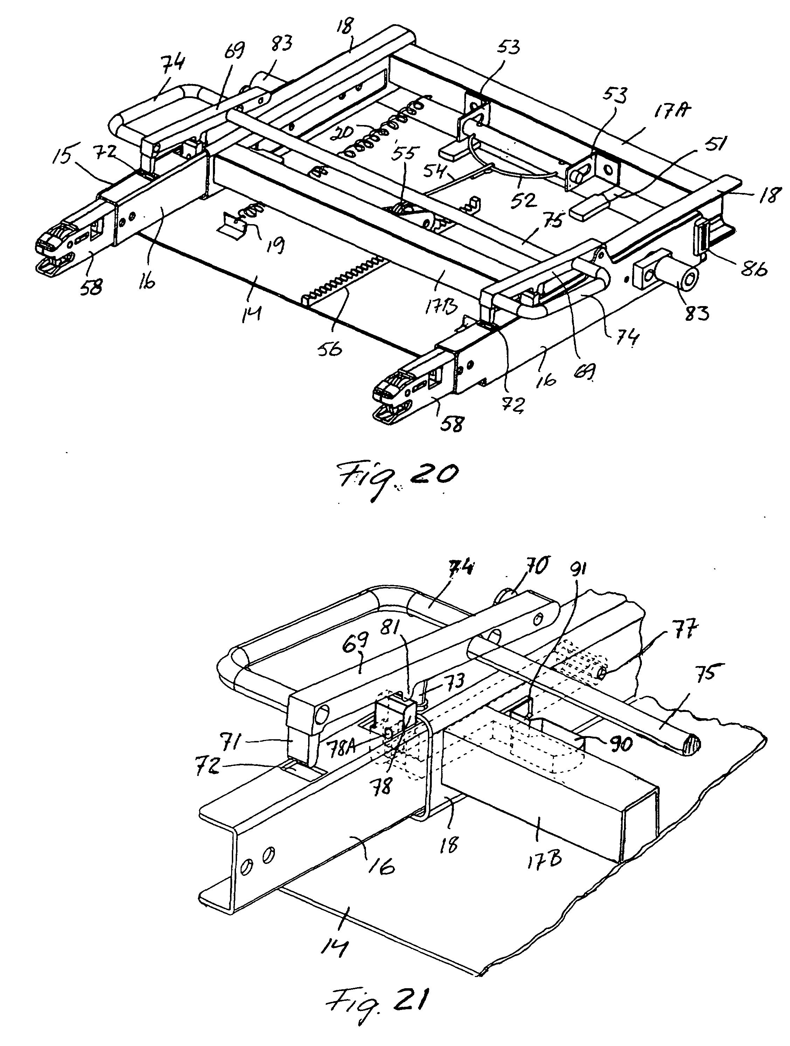

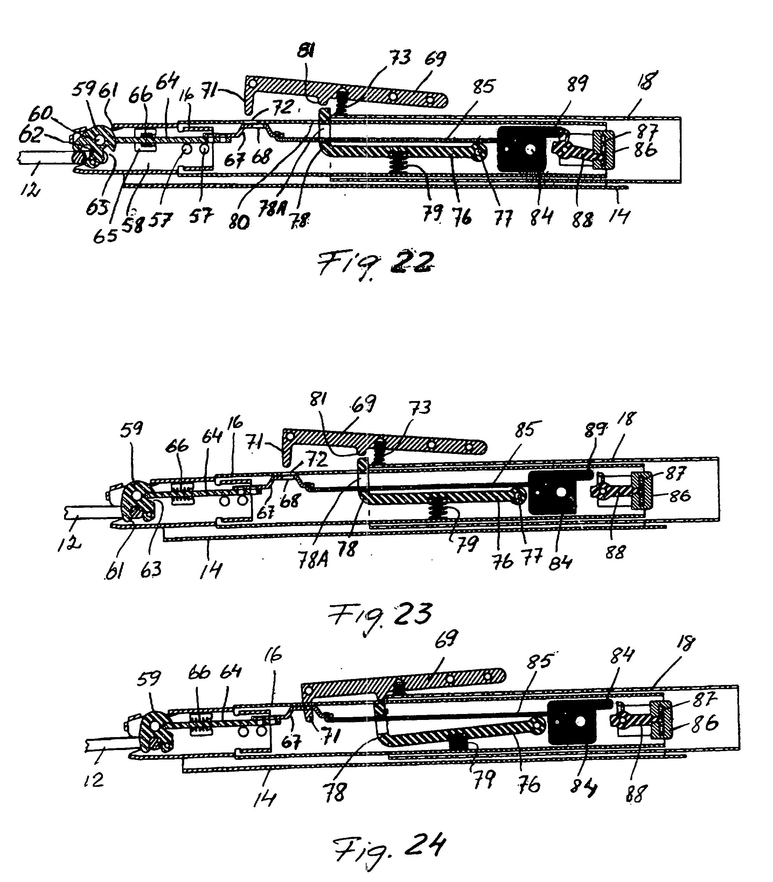

In the other embodiment of the invention which is shown in FIGS. 17-26 the chassis and the slidable carrier principally are constructed in the same manner as described above. The same references therefore have been used on those parts which correspond to each other in the two embodiments. However, the slidable carrier comprises two transverse box girders 17A and 17B the tension springs 20 being engaged between the lugs 19 and the box girder 17A. A handle 51 is connected to the bottom metal sheet 14 to facilitate the handling of the child seat provided with the mounting means. The child seat shall be connected to the slidable carrier as described above. A handle 52 is pivoted to angular brackets 53 which are mounted to the box girder 17A, and by means of a wire rope 54 is connected with a lock tooth 55 pivoted to the box girder 17B, said lock tooth being spring biased to engage a saw-toothed rail 56 which is mounted to the upper side of the bottom metal sheet 14. At one end of each of the box girders 15, 16 of the chassis a connector 58 is connected by means of rivets 57 said connector comprising a lock hook 59 which is pivoted on a pin 60 and is biased by means of a shackle spring for swinging movement clockwise as seen for example in FIG. 22. The lock hook 59 forms a notch 62 for engagement with one of the brackets 12 and a notch 63 for engagement with a latch member 64 which is displaceably guided in a struck flap 65 and is biased by means of a helical spring 66 to engage the edge surface of the lock hook at one end thereof. At the other end of the latch member 64 a metal sheet element 67 is riveted said element having an aperture 68 in a bent-up central portion of the metal sheet element. This bent-up portion engages or is located adjacent the lower side of the upper flange of the U-shaped section 16.

On each box girder 15, 16 a latch clasp 69 is pivoted at one end thereof on a lug 70 formed by the bent-up edge flange 15 the other end of the latch clasp being shaped as a hook 71 located in register with an aperture 72 in the upper flange of the U-shaped section 16 said aperture being dimensioned in order that the hook can be passed therethrough. However, the hook cannot pass through the aperture with the latch member 67 in engagement with the lock hook 59 outside the notch 63 as shown in FIG. 22 because the aperture 68 in the metal sheet element 67 then is displaced in relation to the aperture 72 so that the metal sheet element prevents the passage of the hook 71. The latch clasp is biased by means of a compression spring 73 engaged between the clasp and the upper flange of the U-shaped section 16, in order to be kept in the raised position shown in FIGS. 19, 22 and 23. A handle 74 projecting from the side of the chassis is provided on the latch clasp, and the latch clasps provided at one and the other side of the slidable carrier are interconnected by means of a rod 75. Inside the box girder 15, 16 a blocking clasp 76 is pivotally mounted at one end thereof at 77 while the other end forms a hook 78. The blocking clasp is biased by means of a compression spring 79 engaged between the clasp and the lower flange of the U-shaped section 16 said spring maintaining the blocking clasp in a raised position according to FIGS. 22 and 23, in which the hook 78 projects upwards through an aperture 80 in the upper flange of the U-shaped section 16. Then, the projecting portion of the hook is located in front of the end of the U-shaped section 18 forming part of the slidable carrier, such that the carrier and thus the child seat mounted to the carrier cannot be displaced to the left in relation to the chassis. The latch clasp 69 at the lower side thereof has a projection 81 which can be engaged with the hook 78 at lowering of the latch clasp when this is possible.

When the child seat shall be locked to the vehicle seat it is held above and close to the vehicle seat with the slidable carrier and thus the child seat withdrawn in relation to the chassis and locked by means of the hook 78 in the position shown in FIGS. 17, 19 and 23 the springs 20 being tensioned. The latch member 64 is located outside the notch 63. Therefore, the blocking clasp cannot be pressed down in order to release the slidable carrier by lowering the latch clasp 69 and thus engagement of the projection 81 with the hook 78 because the passage of the hook 71 through the aperture 72 is blocked by the metal sheet element 67.

The child seat is now moved with the lock hooks 59 against the respective brackets 12 which are received by the respective notches 62, FIG. 22. A notch 81' diverging towards the mouth thereof is provided in a cover 82 enclosing the connector, in order to facilitate guiding of the lock hook 59 onto the bracket 12. This operation can easily be performed because one has free view of the connectors behind the withdrawn child seat. When the connector is engaged with the bracket 12 and this is received in the notch 62 the lock hook 59 is swung to locking position counter-clockwise as seen in FIG. 22 against the bias of the shackle spring 61 so that the latch member 64 can snap into the notch 63 in order to latch the lock hook in the locking position thereof, FIG. 23. When this happens a clicking sound is heard. The child seat after connection is swung downwards onto the seat bottom 11A of the vehicle seat 11 to the position in FIG. 1 in which the child seat rests stationarily at the bottom metal sheet 14 against the seat bottom 11A.

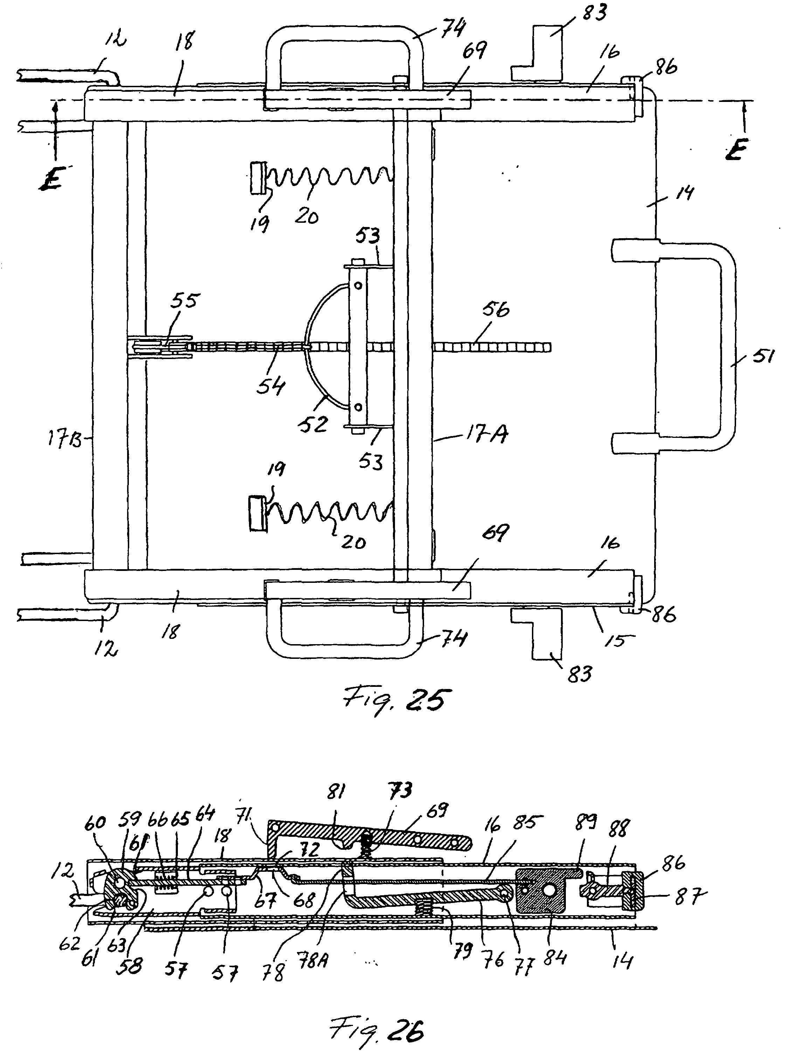

When the latch member 64 snaps into the notch 63 the metal sheet element 67 is displaced to the left as seen in FIG. 22 so that the aperture 68 will be located in register with the aperture 72, FIG. 23. Then, the latch clasp 69 can be swung against the spring bias 73 because the hook 71 can now pass through the apertures 68 and 72. The downward swinging movement takes place by pressing down one of the handles 74. The purpose of having two handles when both latch clasps can be depressed by using only one handle because the latch clasps are interconnected, is that one shall be able to easily operate the latch clasps independently of the child seat being mounted at the right or left side of the vehicle. When the latch clasps are depressed the hook 78 of the blocking clasps 76 is depressed from the blocking position thereof in front of the slidable carrier, FIGS. 22 and 23, against the spring bias 79 to the position according to FIG. 24 so that the slidable carrier and thus the child seat mounted on the carrier can be displaced to the left as seen in FIG. 1 in relation to the chassis to the position shown in FIG. 2 in which the seat back 10B of the child seat is engaged with the seat back 11B of the vehicle seat. The displacement takes place initially by means of the springs 20 over about 10-20 mm and then manually. Under the displacement the lock tooth 55 rasping over the saw-toothed rail 56 and then maintains the child seat in the position of use on the vehicle seat. The mounting means is now in the position according to FIGS. 25 and 26. The child seat has been brought to the position of use without sliding on the seat bottom of the vehicle seat because the displacement from the position in FIG. 1 to the position according to FIG. 2 takes place between the slidable carrier and the stationary chassis.

When the child seat is loaded at a collision or at sudden braking the same favourable conditions prevail as in the embodiment first described.

For releasing the child seat from the vehicle seat there is provided on each box girder 15, 16 adjacent the end which is opposite to the lock hook 59 an operating handle 83 which is displaceable along the box girder 15, 16 and engages in a block 84 displaceably mounted in the box girder said block being connected by means of a coupling rod 85 with the metal sheet element 67 and thus with the latch member 64. The connecting rod passes through a slot 78A in the hook 78. By displacement of the operating handle 83 to the right as seen in FIGS. 25 and 26 the latch member 64 is withdrawn from the notch 63 against the bias of the spring 66 such that the lock hook 59 can be disengaged from the bracket 12. The child seat with the undercarriage now is in the condition according to FIG. 26 but with the lock hooks 59 in the released position and is taken out from the vehicle in this condition which is also a shipping position.

In order to return the child seat to the withdrawn position before or in connection with the child seat being placed in a vehicle, the handle 51 on the bottom metal sheet 14 is grasped by one hand and the handle 52 on the slidable carrier is grasped by the other hand in order to disengage the lock tooth 55 from the saw-toothed rail 56 on the bottom metal sheet 14. The slidable carrier and the child seat mounted thereon then can be withdrawn on the chassis the blocking clasp 76 being raised by the spring 79 and the hook 78 projecting upwards through the aperture 50 and blocking the return of the slidable carrier. The mounting means then is again in the position according to FIGS. 17, 19 and 22.

Also the fastening means according to the second embodiment of the invention has an indicating mechanism. A plastic housing 86 is mounted to the outside of the flange 15 in the right end of the box girder 15, 16, and an indicator 87 is displaceably guided in this plastic housing. The indicator is spring biased to a withdrawn position inside the housing but can be displaced against the spring bias to a projected position. Inside the box girder 15, 16 a transmission element 88 is pivotally mounted. The block 84 has a projection 89 which can be engaged with the element 88 which extends into the plastic housing 86 wherein it is received in an oblique slot in the indicator 87.

When the lock hook 59 is in open position according to FIG. 22 the latch member 64 is withdrawn against the bias of the spring 66, and the block 84 is held in a right end position by means of the coupling rod 85. The projection 89 presses against the element 88 and keeps this element in an angled position the indicator 87 being in an indicating position wherein it is held projected from the box girder 15, 16, FIGS. 17 and 22, against spring bias. That the indicator is in this position can be verified by the sight as well as the feeling. If the lock hook now is displaced to engagement position the latch member 64 will be displaced to the left when it snaps into the notch 63, and then the block 84 and the projection 89 are withdrawn to the position according to FIGS. 23, 24 and 26. The indicator 87 will now be displaced into the housing 86 under the spring bias while the transmission element 88 moves along the oblique slot in the indicator 87. No part of the indicator 76 projects now from the box girder 15, 16. When it is not possible to see or feel that the indicator projects from the box girder 15, 16 the connector 58 accordingly is in the latched position thereof.

Far from all vehicles are at present provided with fastening brackets of the type ISOFIX. If the slidable carrier with the child seat mounted thereon is withdrawn and the connectors thus are uncovered, FIGS. 17 and 22, in order to be engaged with the fastening brackets 12 and if the user then finds that there are no fastening brackets in the vehicle, it shall be possible to return the slidable carrier and the child seat to the position according to FIGS. 25 and 26, which cannot, however, be effected at this stage because displacement of the slidable carrier is blocked by the blocking clasp 76 and this blocking can be inhibited by actuating the latch clasp 69 only if the connectors are brought into engaged position. The fastening means therefore has a built-in "change-the-mind function" in order to make it possible that the slidable carrier with the child seat under said conditions is returned to the position according to FIGS. 25 and 26. On each blocking clasp 76 a push-button 90 is provided which projects at the inside of the box girder 15, 16 through a slot 91 in the web of the U-shaped section 16. By this button being depressed it is possible to bring the blocking clasp 76 to open position independent of the latch clasp 69 so that the slidable carrier with the child seat can be displaced to the left as seen in FIG. 22. The seat back of the child seat can be pressed against the seat back of the vehicle seat in the position shown in FIG. 2 and be locked there by means of the latch means 55, 56. The child seat is then anchored in the vehicle by means of the three-point safety belt provided for the vehicle seat. The buttons 90 can be interconnected such that the device will be more easy to use due to the fact that it is necessary to depress one button only.

## Claims

1. A mounting means (13) for a child seat (10) intended to be mounted facing forward on a vehicle seat (11) with the seat back of the child seat placed against the seat back of the vehicle seat, comprising two connectors (27; 58) for co-operation with a fixedly mounted anchoring means available between the seat bottom and seat back of the vehicle seat **characterized in that** the mounting means (13) is intended to be mounted as an undercarriage on the child seat (10) and comprises a chassis (14, 16) which is intended to be mounted in a stationary position on the seat bottom (11A) of the vehicle seat engaging said seat bottom, the connectors being provided at one end of the chassis, and a carrier (17, 18) slidable on the chassis which is intended to be connected with the lower side of the seat bottom (10A) of the child seat to allow manual displacement of the child seat on the chassis towards and away from said one end of the chassis.

2. Mounting means according to claim 1 **characterized in that** the chassis comprises a bottom metal sheet (14) having guide rails (15, 16) along two opposite edges.

3. Mounting means according to claim 2 **characterized in that** the slidable carrier (17, 18) is displaceably guided on the guide rails (15, 16).

4. Mounting means according to claim 3 **characterized in that** the guide rails (15, 16) comprise box girders and that the slidable carrier (17, 18) embraces the box girders (15, 16) at two U-shaped sections (18).

5. Mounting means according to any of claims 2-4 **characterized in that** the connectors (27; 58) are fixedly connected with the guide rails (15, 16) at said one end of the chassis.

6. Mounting means according to any of claims 1-5 **characterized in that** the slidable carrier (17, 18) is spring biased towards said one end of the chassis.

7. Mounting means according to claim 6 **characterized in that** a latch (21, 24; 55, 56) is provided for arresting the slidable carrier (17, 18) in any displaced position on the chassis (14, 16) with regard to displacement towards the opposite end of the chassis.

8. Mounting means according to any of claims 1-7 **characterized in that** each connector (27; 58) comprises a lock hook (28; 59) pivotable between an open position and a lock position, for locking the connector to the anchoring means (12) in the lock position of the lock hook.

9. Mounting means according to claim 8 **characterized in that** a displaceable latch member (33; 64) is spring biased to engagement with the lock hook (28: 59) to latch the lock hook in the lock position thereof.

10. Mounting means according to claim 9 **characterized in that** the latch means (33; 64) is operatively connected with an operating member (42; 83) for disengaging the latch member from the lock hook (28; 59).

11. Mounting means according to claims 5 and 10 **characterized in that** the operating member (42; 83) is located at said opposite end of the chassis (14, 16).

12. Mounting means according to any of claims 8-11 **characterized by** a blocking member (39; 76) for blocking the slidable carrier (17, 18) in a withdrawn position against the spring bias with the lock hook (28; 59) in open position.

13. Mounting means according to claims 4 and 12 **characterized in that** the blocking member (76) is mounted in the box girder (15, 16) and is spring biased to a position projecting from the box girder in front of the slidable carrier (17, 18) in order to form in this position a stop abutment for the slidable carrier with regard to the displacement thereof towards said one end of the chassis.

14. Mounting means according to claim 13 **characterized in that** a manually operable clasp (69) pivoted to the box girder (15, 16) can be engaged with the blocking member (76) for displacement thereof against spring bias from the projecting blocking position.

15. Mounting means according to claim 14 **characterized in that** the clasp (69) at a portion (71) projecting therefrom can be introduced into an aperture (72) in the box girder (15, 16) at said portion when pivoted against spring bias the clasp being engaged with the blocking member (76) for displacement thereof.

16. Mounting means according to claims 9 and 15 **characterized in that** the latch member (64) is spring biased to engage the lock hook (59) which is constructed to displace the latch member by cam action between a first position and a second position at pivoting of the lock hook between open position and lock position.

17. Mounting means according to claim 16 **characterized that** the latch member (64) forms an aperture (68) which is displaced in relation to said aperture (72) in the box girder (15, 16) when the latch member is in said first position, to block the passage through the aperture in the box girder.

18. Mounting means according to claim 16 or 17 **characterized in that** an operating member (90) is connected with the blocking member (76) for direct actuation of the blocking member when said aperture (72) in the box girder (15, 16) is blocked with the lock hook (59) in open position.

19. Mounting means according to any of claims 8-12 **characterized by** an indicator (46; 87) which is operatively connected with the lock hook (28; 59) to indicate that the lock hook is latched in the lock position thereof.

20. Mounting means according to claim 13 **characterized in that** the latch member (33; 64) is connected with the indicator (46; 87) displaceable between a projected and a withdrawn position, to keep the indicator in one of said displaced positions when the latch member (33; 64) is in latching position.

21. Mounting means according to claim 19 or 20 **characterized in that** the indicator (46; 87) is located in said opposite end of the chassis (14, 16).

## Patentansprüche

1. Ein Befestigungsmittel (13) für einen Kindersitz (10), der nach vorne gerichtet auf einem Fahrzeugsitz (11) befestigt werden soll, wobei die Sitzlehne des Kindersitzes gegen die Sitzlehne des Fahrzeugsitzes positioniert ist, umfaßt zwei Verbindungselemente (27; 58) zur Zusammenwirkung mit einem fest angebrachten Verankerungsmittel, das zwischen der Sitzfläche und der Sitzlehne des Fahrzeugsitzes zur Verfügung steht, **dadurch gekennzeichnet, daß** das Befestigungsmittel (13) als ein Unterbau an dem Kindersitz (10) befestigt werden soll, und daß es eine Grundplatte (14, 16), die in einer ortsfesten Position an der Sitzfläche (11A) des Fahrzeugsitzes befestigt werden soll und mit der Sitzfläche im Eingriff steht, wobei die Verbindungselemente an einem Ende der Grundplatte angeordnet sind, und einen an der Grundplatte verschiebbaren Träger (17, 18), der mit der Unterseite der Sitzfläche (10A) des Kindersitzes verbunden werden soll, um eine manuelle Verstellung des Kindersitzes an der Grundplatte in Richtung des einen Endes der Grundplatte und von diesem weg zu erlauben, umfaßt.

2. Befestigungsmittel nach Anspruch 1, **dadurch gekennzeichnet, daß** die Grundplatte ein metallisches Bodenblech (14) mit Führungsschienen (15, 16) entlang zwei gegenüberliegenden Kanten umfaßt.

3. Befestigungsmittel nach Anspruch 2, **dadurch gekennzeichnet, daß** der verschiebbare Träger (17, 18) verschiebbar an den Führungsschienen (15, 16) geführt ist.

4. Befestigungsmittel nach Anspruch 3, **dadurch gekennzeichnet, daß** die Führungsschienen (15, 16) kastenförmige Träger umfassen und daß der verschiebbare Träger (17, 18) die kastenförmigen Träger (15, 16) an zwei U-förmigen Bereichen (18) umfaßt.

5. Befestigungsmittel nach einem der Ansprüche 2 bis 4, **dadurch gekennzeichnet, daß** die Verbindungselemente (27; 58) fest mit den Führungsschienen (15, 16) an dem einen Ende der Grundplatte befestigt sind.

6. Befestigungsmittel nach einem der Ansprüche 1 bis 5, **dadurch gekennzeichnet, daß** der verschiebbare Träger (17, 18) in Richtung des einen Endes der Grundplatte mit einer Feder vorgespannt ist.

7. Befestigungsmittel nach Anspruch 6, **dadurch gekennzeichnet, daß** ein Einschnappelement (21, 24; 55, 56) vorgesehen ist, um den verschiebbaren Träger (17, 18) in jeder verstellten Position an der Grundplatte (14, 16) bezüglich der Verstellung in Richtung des gegenüberliegenden Endes der Grundplatte zu arretieren.

8. Befestigungsmittel nach einem der Ansprüche 1 bis 7, **dadurch gekennzeichnet, daß** jedes Verbindungselement (27; 58) einen Sperrhaken (28;59), der zwischen einer geöffneten Position und einer Sperrposition schwenkbar ist, umfaßt, um das Verbindungselement an dem Verankerungsmittel (12) in der Sperrposition des Sperrhakens zu sperren.

9. Befestigungsmittel nach Anspruch 8, **dadurch gekennzeichnet, daß** ein verstellbares Einschnappelement (33; 64) zum Eingriff mit dem Sperrhaken (28; 59) mit einer Feder vorgespannt ist, um den Sperrhaken in seiner Sperrposition einzuschnappen.

10. Befestigungsmittel nach Anspruch 9, **dadurch gekennzeichnet, daß** das Einschnappmittel (33; 64) mit einem Betätigungselement (42; 83) wirkverbunden ist, um das Einschnappelement aus dem Eingriff mit dem Sperrhaken (28; 59) zu bringen.

11. Befestigungsmittel nach den Ansprüchen 5 und 10, **dadurch gekennzeichnet, daß** das Betätigungselement (42; 83) am gegenüberliegenden Ende der Grundplatte (14, 16) angeordnet ist.

12. Befestigungsmittel nach einem der Ansprüche 8 bis 11, **dadurch gekennzeichnet, daß** ein Blockierelement (39; 76) vorhanden ist, um den verschiebbaren Träger (17, 18) in einer zurückgezogenen Position gegen die Vorspannung der Feder zu blockieren, wobei sich der Sperrhaken (28; 59) in geöffneter Position befindet.

13. Befestigungsmittel nach den Ansprüchen 4 und 12, **dadurch gekennzeichnet, daß** das Blockierelement (76) in dem rechteckigen Träger (15, 16) befestigt und in Richtung einer Position, die von dem kastenförmigen Träger vor dem verschiebbaren Träger (17, 18) vorsteht, durch eine Feder vorgespannt ist, um in dieser Position einen Anschlag für den verschiebbaren Träger bezüglich der Verschiebung von diesem in Richtung des einen Endes der Grundplatte zu bilden.

14. Befestigungsmittel nach Anspruch 13, **dadurch gekennzeichnet, daß** ein manuell betätigbarer Haken (69), der an dem kastenförmigen Träger (15, 16) schwenkbar befestigt ist, mit dem Blockierelement (76) in Eingriff gebracht werden kann, um diesen aus der vorstehenden Sperrposition zu verstellen.

15. Befestigungsmittel nach Anspruch 14, **dadurch gekennzeichnet, daß** der Haken (69) an einem Bereich (71), der von diesem vorsteht, in eine Öffnung (72) in dem kastenförmigen Träger (15, 16) an dem Bereich eingesetzt werden kann, wenn er gegen die Federvorspannung geschwenkt wird, wobei der Haken mit dem Blockierelement (76) zur Verschiebung von diesem in Eingriff gebracht ist.

16. Befestigungsmittel nach den Ansprüchen 9 und 15, **dadurch gekennzeichnet, daß** das Einschnappelement (64) mit einer Feder vorgespannt ist, um mit dem Sperrhaken (59) in Eingriff zu kommen, der ausgebildet ist, um das Einschnappelement durch eine Nockenwirkung zwischen einer ersten Position und einer zweiten Position beim Schwenken des Sperrhebels zwischen geöffneter Position und Sperrposition zu verstellen.

17. Befestigungsmittel nach Anspruch 16, **dadurch gekennzeichnet, daß** das Einschnappelement (64) eine Öffnung (68) bildet, die zu der Öffnung (72) in dem kastenförmigen Träger (15, 16) versetzt, ist, wenn sich das Einschnappelement in der ersten Position befindet, um den Durchgang durch die Öffnung in den rechteckigen Träger zu blockieren.

18. Befestigungsmittel nach Anspruch 16 oder 17, **dadurch gekennzeichnet, daß** ein Betätigungselement (90) mit dem Blockierelement (76) verbunden ist, um direkt das Blockierelement zu betätigen, wenn die Öffnung (72) in dem kastenförmigen Träger (15, 16) mit dem Sperrhaken (59) in geöffneter Position blockiert ist.

19. Befestigungsmittel nach einem der Ansprüche 8 bis 12, **dadurch gekennzeichnet, daß** ein Anzeigeelement (46; 87) vorhanden ist, das mit dem Sperrhaken (28; 59) wirkverbunden ist, um anzuzeigen, daß der Sperrhaken in seiner Sperrposition eingeschnappt ist.

20. Befestigungsmittel nach Anspruch 13, **dadurch gekennzeichnet, daß** das Einschnappelement (33; 64) mit dem Anzeigeelement (46; 87), das zwischen einer vorstehenden und einer zurückgezogenen Position verstellbar ist, wirkverbunden ist, um das Anzeigeelement in einer der verstellten Positionen zu halten, wenn sich das Einschnappelement (33; 64) in Einschnapposition befindet.

21. Befestigungsmittel nach Anspruch 19 oder 20, **dadurch gekennzeichnet, daß** das Anzeigeelement (46; 87) am gegenüberliegenden Ende der Grundplatte (14, 16) angeordnet ist.

## Revendications

1. Dispositif de montage (13) pour un siège enfant (10) destiné à être monté face à la route sur un siège de véhicule (11) avec le dossier du siège enfant placé contre le dossier du siège de véhicule, comprenant deux connecteurs (27 ;58) pour une coopération avec un dispositif d'ancrage monté fixement disponible entre l'assise et le dossier du siège de véhicule **caractérisé en ce que** le dispositif de montage (13) est destiné à être monté en tant que chariot porteur sur le siège enfant (10) et comprend un châssis (14, 16) qui est destiné à être monté dans une position stationnaire sur l'assise (11A) de siège du véhicule, en contact avec ladite assise, les connecteurs étant fournis à une extrémité du châssis, et un support (17, 18) coulissant sur le châssis qui est conçu pour être raccordé au côté inférieur de l'assise (10A) du siège enfant pour permettre le déplacement manuel du siège enfant sur le châssis en se rapprochant et s'éloignant de ladite une extrémité du châssis.

2. Dispositif de montage selon la revendication 1,
**caractérisé en ce que** le châssis comprend une plaque métallique inférieure (14) possédant des rails de guidage (15, 16) le long de deux rebords opposés.

3. Moyen de montage selon la revendication 2, **caractérisé en ce que** le support coulissant (17, 18) est guidé de façon mobile sur les rails de guidage (15, 16).

4. Dispositif de montage selon la revendication 3, **caractérisé en ce que** les rails de guidage (15, 16) comprennent des poutres en caisson et **en ce que** le support coulissant (17, 18) renferme les poutres en caisson (15, 16) en deux parties en forme de U (18).

5. Dispositif de montage selon l'une quelconque des revendications 2 à 4, **caractérisé en ce que** les connecteurs (27 ; 58) sont raccordés fixement aux rails de guidage (15, 16) à ladite une extrémité du châssis.

6. Dispositif de montage selon l'une quelconque des revendications 1 à 5, **caractérisé en ce que** le support coulissant (17, 18) est rappelé par ressort vers ladite une extrémité du châssis.

7. Dispositif de montage selon la revendication 6, **caractérisé en ce qu'**un dispositif d'enclenchement de sûreté (21, 24 ; 55, 56) est fourni pour arrêter le support coulissant (17, 18) dans une quelconque position déplacé sur le châssis (14, 16) par rapport au déplacement vers l'extrémité opposée du châssis.

8. Dispositif de montage selon l'une quelconque des revendications 1 à 7, **caractérisé en ce que** chaque connecteur (27 ; 58) comprend un crochet de verrouillage (28 ; 59) pouvant pivoter entre une position ouverte et une position verrouillée, pour verrouiller le connecteur sur le dispositif d'ancrage (12) dans la position verrouillée du crochet de verrouillage.

9. Dispositif de montage selon la revendication 8, **caractérisé en ce qu'**un élément d'enclenchement mobile (33 ; 64) est rappelé par ressort pour s'engager avec le crochet de verrouillage (28 ; 59) pour enclencher le crochet de verrouillage dans sa position verrouillée.

10. Dispositif de montage selon la revendication 9, **caractérisé en ce que** le moyen d'enclenchement (33 ; 64) est raccordé de manière opérationnelle à un élément de manoeuvre (42 ; 83) pour désengager l'élément d'enclenchement du crochet de verrouillage (28 ; 59).

11. Dispositif de montage selon les revendications 5 et 10, **caractérisé en ce que** l'élément de manoeuvre (42 ; 83) est situé à l'extrémité opposée du châssis (14, 16).

12. Dispositif de montage selon l'une quelconque des revendications 8 à 11, **caractérisé par** un élément de blocage (39 ; 76) pour bloquer le support coulissant (17, 18) dans une position retirée contre la force de rappel du ressort avec le crochet de verrouillage (28 ; 59) en position ouverte.

13. Dispositif de montage selon les revendications 4 et 12, **caractérisé en ce que** l'élément de blocage (76) est monté dans la poutre en caisson (15, 16) et est rappelé par ressort dans une position se projetant depuis la poutre en caisson face au support coulissant (17, 18) afin de former dans cette position un butoir d'arrêt pour le support coulissant par rapport au déplacement de celui-ci vers ladite une extrémité du châssis.

14. Dispositif de montage selon la revendication 13, **caractérisé en ce qu'**une attache utilisable manuellement (69) pivotée vers la poutre en caisson (15, 16) peut être engagée avec l'élément déblocage (76) pour le déplacement de celui-ci contre la force de rappel du ressort se projetant depuis la position de blocage.

15. Dispositif de montage selon la revendication 14, **caractérisé en ce que** l'attache (69) sur une partie (71) se projetant depuis celle-ci peut être introduite dans une ouverture (72) dans la poutre en caisson (15, 16) sur ladite partie lorsque pivotée contre la force de rappel du ressort l'attache étant engagée avec l'élément de blocage (76) pour le déplacement de celui-ci.

16. Dispositif de montage selon les revendications 9 et 15, **caractérisé en ce que** l'élément d'enclenchement (64) est rappelé par ressort pour engager le crochet de verrouillage (59) qui est conçu pour déplacer l'élément d'enclenchement par une action de came entre une première position et une deuxième position au pivotement du crochet de verrouillage entre la position ouverte et la position verrouillée.

17. Dispositif de montage selon la revendication 16, **caractérisé en ce que** l'élément d'enclenchement (64) forme une ouverture (68) qui est déplacée par rapport à ladite ouverture (72) dans la poutre en caisson (15, 16) lorsque l'élément d'enclenchement se trouve dans ladite première position, pour bloquer le passage à travers l'ouverture dans la poutre en caisson.

18. Dispositif de montage selon la revendication 16 ou 17, **caractérisé en ce qu'**un élément de manoeuvre (90) est raccordé à l'élément de blocage (76) pour l'actionnement direct de l'élément de blocage lorsque ladite ouverture (72) dans la poutre de caisson (15, 16) est bloquée avec le crochet de verrouillage (59) dans la position ouverte.

19. Dispositif de montage selon l'une quelconque des revendications 8 à 12, **caractérisé par** un indicateur (46 ; 87) qui est raccordé de manière opérationnelle au crochet de verrouillage (28 ; 59) pour indiquer que le crochet de verrouillage est enclenché dans la position verrouillée de celui-ci.

20. Dispositif de montage selon la revendication 13, **caractérisé en ce que** l'élément d'enclenchement (33 ; 64) est raccordé à l'indicateur (46 ; 87) pouvant se déplacer entre une position projetée et une position retirée, pour maintenir l'indicateur dans l'une desdites positions déplacées lorsque l'élément d'enclenchement (33 ; 64) est dans la position d'enclenchement.

21. Dispositif de montage selon la revendication 19 ou 20, **caractérisé en ce que** l'indicateur (46 ; 87) est situé dans ladite extrémité opposée du châssis (14, 16).
